# EUROPÄISCHE PATENTANMELDUNG

(11) **EP 4 557 584 A1**
(43) Veröffentlichungstag der Anmeldung: **21.05.2025**
(21) Anmeldenummer: 23210487.7
(22) Anmeldetag: 17.11.2023
(51) Int. Cl.: H02K 5/08, H02K 5/02, B32B 15/14, B32B 15/20

(54) **INAKTIVTEIL**

(71) Anmelder: Siemens Aktiengesellschaft, 80333 München (DE)
(72) Erfinder: Seufert, Reiner, 97616 Salz (DE); Vollmer, Rolf, 36129 Gersfeld (DE)
(74) Vertreter: Siemens Patent Attorneys

(57) **Zusammenfassung**

Die Erfindung betrifft ein Inaktivteil einer dynamoelektrischen Maschine, aufweisend Basalt, insbesondere wenigstens eine Basaltfaser.

## Beschreibung

Die Erfindung betrifft ein Inaktivteil einer dynamoelektrischen Maschine.

Elektrische Maschinen benötigen neben den magnetischen Aktivteilen auch nicht magnetisch wirksame Tragstrukturen zur Kraftweiterleitung. Diese Bauteile erfüllen meist Funktionen, die oft hohe Steifigkeiten und Festigkeiten benötigen. Es werden vorzugsweise Metalle eingesetzt.

Metalle haben einen hohen Energiebedarf bei deren Herstellung und haben meist ein hohes Gewicht. Oft sind Metalle durch Produktionskapazitäten und logistische und/oder politische Rahmenbedingungen begrenzt.

Der Erfindung liegt die Aufgabe zugrunde, dies zu verbessern.

Die Lösung der Aufgabe gelingt durch Anspruch 1, d. h. ein Inaktivteil einer dynamoelektrischen Maschine, aufweisend Basalt, insbesondere wenigstens eine Basaltfaser.

Das Inaktivteil weist vorzugsweise Aluminium auf.

Aktivteile sind insbesondere Spulen, Statoren und Rotoren und dienen vorteilhaft der Drehmomenterzeugung. Inaktivteile sind weitere Komponenten von Maschinen, die nicht der Drehmomenterzeugung dienen, z. B. Lagerschilde, Welle, Deckel, Gehäuse etc.

Basalt ist weltweit leicht verfügbar und kann durch Vulkantätigkeit immer wieder neu gewonnen werden.

Die Basaltfasern weisen vorzugsweise wenigstens im Wesentlichen die gleiche Dichte wie das Aluminium bzw. das das Aluminium aufweisende Material auf.

Die Festigkeit liegt vorteilhaft ca. 30-fach höher: Basaltfaser ca. 4,4 kWh/kg; Aluminium 15 ca. kWh/kg.

Zur Herstellung des Bauteils, insbesondere gänzlich aus, oder wenigstens mit vorzugsweise basaltfaserverstärktem Aluminium wird nur ca. die Hälfte der Energie benötigt im Vergleich zur Herstellung aus reinem Aluminium.

Durch die höhere Festigkeit des Verbundmaterials ist noch eine weitere Materialeinsparung möglich.

Das führt zu einer weiteren Reduktion des Energiebedarfs pro Bauteil und einer entsprechenden Kostenreduktion.

Des Weiteren führt dieser Kompositwerkstoff umfassend Basalt und Aluminium zu einer erhöhten Schalldämpfung, was wiederum die Umweltbelastung durch Schall reduziert.

Außerdem ergeben sich folgende Vorteile im Vergleich zu reinem Aluminium: Erweiterter Temperaturbereich, ökologische Verträglichkeit, erhöhte Korrosionsbeständigkeit, erhöhter Härtegrad, reduziertes Setzverhalten, reduzierte Wärmeleitfähigkeit (insbesondere vorteilhaft zur Geberentkopplung). Ferner ist ein ökologisches Design mit sichtbarem Gewebe möglich.

Auch ungewebte (non woven) Matten aus aluminiumbeschichteten Basaltfasern können zum Herstellen geeigneter Bauteile verwendet werden.

Eine weitere Möglichkeit ist z.B. bei rotationssymmetrischen Teilen diese aluminiumbeschichteten Basaltfasern um eine endkonturnahe Form zu wickeln.

In einer bevorzugten Ausführungsform weist das Inaktivteil wenigstens eine Basaltfaser auf, wobei die Basaltfaser mit einem Material ummantelt ist, welches Aluminium aufweist.

Das Aluminium wird vorteilhaft auf diese Weise verstärkt.

Es ist möglich reines Aluminium einzusetzen. Jedoch sind auch Aluminiumlegierungen einsetzbar.

Die die Basaltfaser kann auch auf einer Aluminiumfolie angeordnet sein.

Vorteilhaft ist zudem eine Ausführungsform, wonach die ummantelte Basaltfaser als Gewebe, Filz und/oder Gewirke ausgebildet ist.

Das Gewebe kann zweidimensional oder auch dreidimensional ausgebildet sein.

Ein Gewebe ist hierbei eine, vorzugsweise rechtwinklige Verkreuzung, zweier Fasern oder auch eine Verkreuzung von unterschiedlichen Abschnitten einer Faser.

Vorzugsweise liegt eine wenigstens im Wesentlichen kreuzförmige Verwebung vor.

Alternativ oder zusätzlich ist auch ein Filz oder ein Gewirke möglich.

Die Lösung der Aufgabe gelingt zudem durch ein Verfahren zur Herstellung eines Inaktivteils, wobei die Basaltfaser mit einem Aluminium aufweisenden Material ummantelt wird, wobei durch die ummantelte Faser ein Gewebe, Filz und/oder Gewirke gebildet wird, wobei das Gewebe, der Filz und/oder das Gewirke, vorzugsweise endkonturnah, verdichtet wird.

Das Gewebe, der Filz und/oder das Gewirke werden vorzugsweise in einer das Inaktivteil abbildenden Form verdichtet.

Vorteilhaft ist es, wenn unter Eintrag von Wärme verdichtet wird.

Dies gelingt beispielsweise von außen über die Erwärmung der Form.

Die Verdichtung und/oder Erwärmung führt vorteilhaft dazu, dass das geformte Bauteil von außen dicht ist.

Es ist auch möglich, dass während der Verdichtung durch Strom, Reibung und/oder Mikrowellen erwärmt wird.

Vorteilhaft ist es auch, wenn derart verdichtet und/oder erwärmt wird, dass das das Aluminium aufweisende Material metallstoffschlüssig verbunden wird.

Auf diese Weise ist eine gute Dichtigkeit erreichbar.

Vorteilhaft ist zudem eine Ausführung, wonach das Gewebe, der Filz und/oder das Gewirke rechteckig oder quadratisch ausgebildet ist, wobei das Gewebe, der Filz und/oder das Gewirke um eine Wellenseele, beispielsweise in Form eines Stabs, Rohrs und/oder Wickeldorns, gewickelt wird, derart, dass eine Welle gebildet wird.

Das Gewebe, der Filz und/oder das Gewirke können ferner auch T-förmig ausgebildet sein, wobei das Gewebe, der Filz und/oder das Gewirke um eine Wellenseele, beispielsweise in Form eines Stabs, Rohrs und/oder Wickeldorns, gewickelt wird, derart, dass eine Wellen-Tragkonstruktions-Einheit gebildet wird.

Dies ist in den Figuren gezeigt.

Die Lösung der Aufgabe gelingt ferner durch eine Verwendung einer Basaltfaser, wobei die Basaltfaser mit einem Aluminium aufweisenden Material ummantelt ist, als Bestandteil, insbesondere als alleiniger Bestandteil, eines Inaktivteils einer dynamoelektrischen Maschine.

Die Lösung der Aufgabe gelingt ferner durch eine dynamoelektrische Maschine, aufweisend ein derartiges Inaktivteil.

Die Maschine kann eine dynamoelektrische rotatorische Maschine oder auch eine Linearmaschine sein.

Im Folgenden wird die Erfindung anhand der in den Figuren dargestellten Ausführungsbeispiele näher beschrieben und erläutert. Es zeigen:

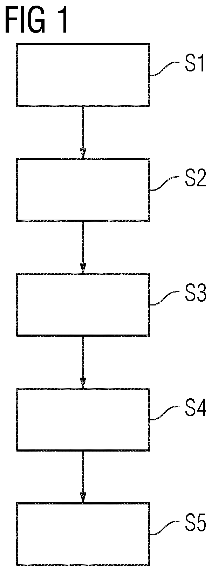

- FIG 1: ein Verfahren,
- FIG 2: exemplarisch einen Deckel,
- FIG 3: exemplarisch eine Platte und
- FIG 4: verschiedene Bauteile,
- FIG 5: eine Basaltfaser,
- FIG 6: ein Gewebe,
- FIG 7: ein Aufwickeln,
- FIG 8: ein Gewebe.

In einem Verfahrensschritt S1 des Verfahrens zur Herstellung eines Inaktivteils wird die Basaltfaser mit einem Aluminium aufweisenden Material ummantelt.

In einem Verfahrensschritt S2 wird mittels der ummantelten Faser ein Gewebe, Filz und/oder Gewirke gebildet.

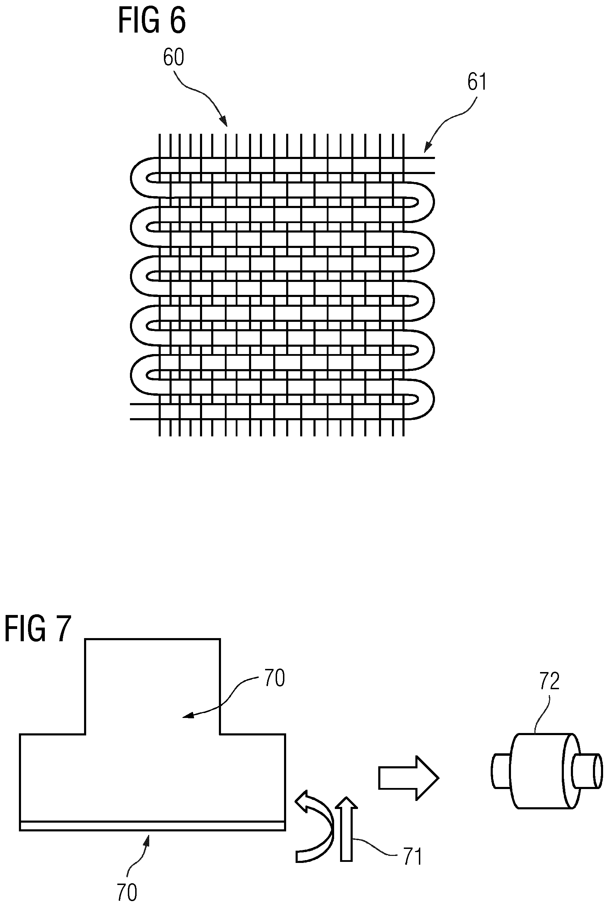

In einem Verfahrensschritt S3 wird das Gewebe, Filz oder Gewirke in eine Form gegeben, die das zu bildende Inaktivteil abbildet. Alternativ oder zusätzlich kann dies auch mittels eines Aufwickelns, vgl. FIG 7, gelingen.

In einem Verfahrensschritt S4 erfolgt ein Verdichten.

Dies kann optional unter Wärmeeintrag von außen und/oder Bestromung und/oder Mikrowelleneintrag zur Erwärmung in einem Verfahrensschritt S5 gelingen.

Das Gewebe, der Filz und/oder das Gewirke wird vorzugsweise endkonturnah verdichtet.

Vorzugsweise wird derart verdichtet und/oder erwärmt, dass das das Aluminium aufweisende Material metallstoffschlüssig verbunden wird.

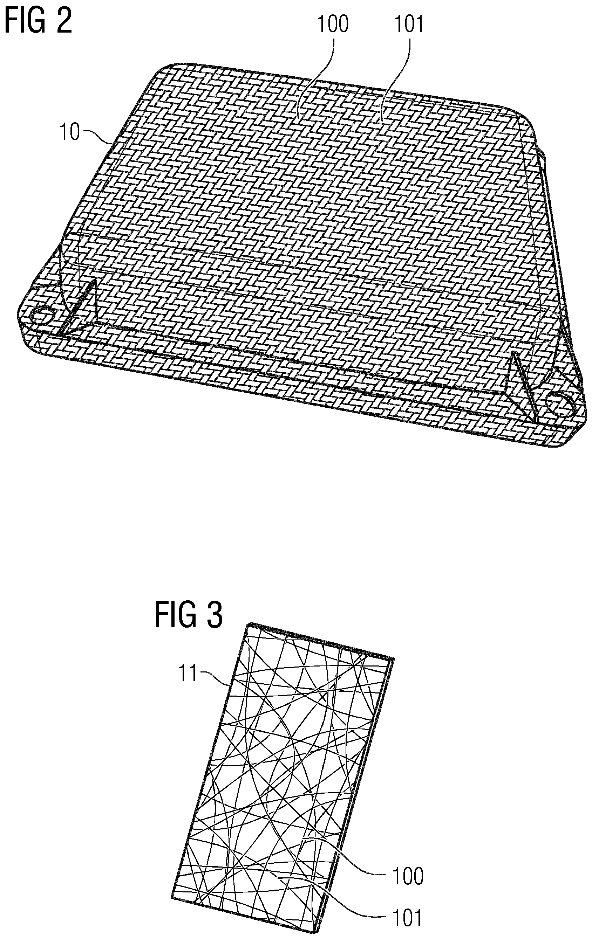

FIG 2 zeigt exemplarisch einen Deckel 10. Der Deckel 10 wurde mittels des beschriebenen Verfahrens gefertigt und weist vorteilhaft ein Gewebe aufweisend die mit Aluminium ummantelte Basaltfaser auf.

FIG 3 zeigt exemplarisch eine Platte, die non wovon, also ungewebt, ist (beispielsweise Filz oder anderes Gewirke).

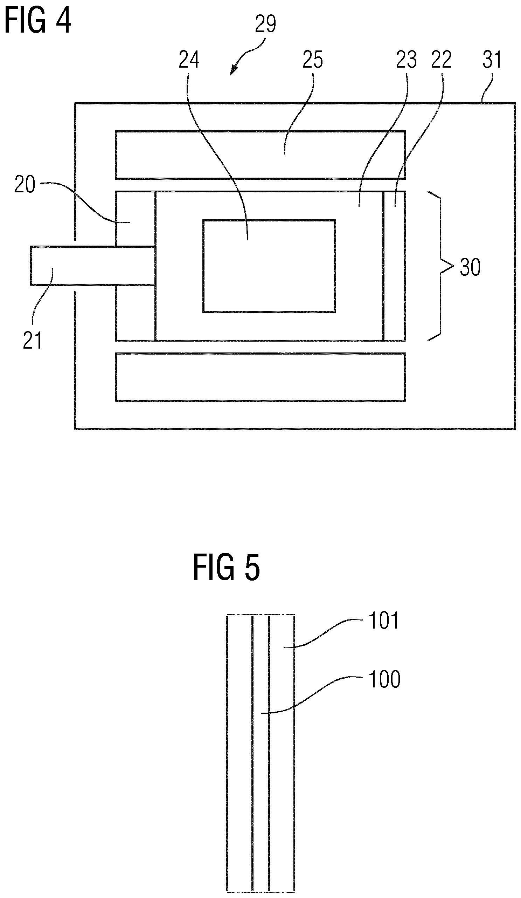

FIG 4 zeigt verschiedene Bauteile einer dynamoelektrischen rotatorischen Maschine 29, die auf die beschriebene Weise hergestellt werden können bzw. die die Basaltfaser aufweisen.

Die Figur zeigt eine Welle 21, ein Lagerschild 20 und ein Lagerschild 22 sowie eine Tragkonstruktion 23 eines Rotors 30. Diese sind vorteilhaft Inaktivteile.

Der Rotor 30 kann Teil einer permanenterregten Synchronmaschine sein und somit kann die inaktive Tragkonstruktion Magnete tragen. Sie kann jedoch auch als Tragkonstruktion eines Käfigläufers oder Schleifringläufers sein. Das momentbildende Element ist rein exemplarisch mit 24 gekennzeichnet.

Die Figur zeigt ferner einen Stator 25.

Auch ein Gehäuse 31 ist ein Inaktivteil und kann die Basaltfaser mit Aluminium aufweisen bzw. aus dieser gefertigt sein.

Durch die Erfindung können die massiven, metallischen Werkstoffe der Inaktivteile durch basaltfaserverstärktes Aluminium ersetzt werden. Dazu werden mit Aluminium ummantelte Basaltfaser vorteilhaft zu Geweben, insbesondere 3D-Gewebe, verarbeitet und in einem thermischen Prozess endkonturnah verdichtet und verbunden werden, sodass das Bauteil vorteilhaft von außen dicht wird.

Alternativ zu Geweben ist auch eine Verarbeitung zu Filz oder Gewirke möglich, die anschließend auch im thermischen Prozess zu einer Form verdichtet werden können.

Vorzugsweise erfolgt der thermische Prozess in einer dem Zielteil entsprechenden Form. Die Wärme, die das Aluminium metallstoffschlüssig verbindet, wird beispielsweise von außen über die Form eingeleitet oder durch Strom, Reibung oder Mikrowellen erzeugt. Auch andere Arten sind denkbar.

FIG 5 zeigt eine Basaltfaser 100 sowie eine Ummantelung 101 mit einem Aluminium aufweisenden Material.

FIG 6 zeigt beispielhaft ein geeignetes Gewebe 60. Die ummantelte Basaltfaser 100 ist vorzugsweise als Gewebe, Filz und/oder Gewirke ausgebildet. Das Gewebe in FIG 6 ist als Endlosgewebe mit Schussfäden 61 ausgebildet. Schussfäden in axialer Richtung bewirken vorteilhaft eine hohe Biegefestigkeit und Steifigkeit.

Bei Geweben sind beispielsweise parallel angeordnete Fäden in Richtung des sich aufbauenden Gewebes vorhanden sowie dazu vorteilhaft wenigstens im Wesentlichen quer verlaufende Fäden, insbesondere senkrecht dazu verlaufende Fäden. Die Fäden werden vorteilhaft durch die Längsfäden durchgeschossen.

FIG 7 zeigt ein Aufwickeln.

Ein Gewebe 70, aufweisend Basaltfasern auf einer Aluminiumfolie oder mit Aluminium ummantelte Basaltfasern ist vorzugsweise T-förmig.

Die Aluminiumfolie kann aus Aluminium sein oder Aluminium aufweisen.

Das Gewebe wird um eine Wellenseele gewickelt. Die Wellenseele ist beispielsweise ein Stab, ein Rohr und/oder ein Wickeldorn.

Das Gewebe wird um die Wellenseele gewickelt, siehe Bezugszeichen 71, beispielsweise unter Temperatur und/oder Druck, derart, dass eine Wellen-Tragkonstruktions-Einheit 72 gebildet wird. Diese Wellen-Tragkonstruktions-Einheit 72 ist vorzugsweise einstückig.

Durch das Aufwickeln kann auch nur eine Welle gebildet werden.

Durch das Aufwickeln kann auch nur eine Tragkonstruktion für einen Rotor oder Stator. Hierbei wird vorteilhaft eine Umwicklungshilfe später entfernt.

Besonders geeignet ist hierbei das in FIG 6 gezeigte Gewebe.

Die Fasern werden vorteilhaft als Langfasern so angeordnet, dass sie den Belastungen, Durchbiegung und Torsion, mit hoher Steifigkeit entgegenwirken.

Die Verbindung zwischen den Basalt-Langfasern und der Matrix aus Aluminium ist vorteilhaft eine Mischung aus Form- und Stoffschluss.

Der Basaltfaseranteil beträgt vorteilhaft wenigstens 30% und höchstens 80% des Volumens der Welle.

Die Welle kann axial unterschiedliche Durchmesser haben, z.B. um Anschläge oder Passungen für Kugellager zu erzeugen. Dazu werden vorteilhaft Fasern, Bänder und/oder Gewebe tangential um die Welle gewickelt, bzw. das Grundtextil hat bereits ein entsprechendes Webmuster/Schnittmuster.

Das Aluminium befindet sich beispielsweise als Beschichtung auf der Basaltfaser. Es können auch zusätzliche Aluminiumfasern oder Aluminiumfolie im Wickelkörper enthalten sein.

Aluminium kann auch durch nachträgliche Infiltration eingebracht werden.

Die Verfestigung der gewickelten Welle erfolgt vorzugsweise mittels thermischer Prozesse.

Die Welle wird vorzugsweise additiv endkonturnah hergestellt, sodass zur Fertigstellung nur geringe oder keine Zerspanungs- oder andere Glättungsverfahren erforderlich sind.

Glättungsverfahren können auch dazu dienen die Oberflächendichte und die Festigkeit zu erhöhen. Mögliche Glättungsverfahren sind ein DensiForm-Verfahren, Rollieren, Kugelstrahlen, Heißprägen und/oder Presshärten.

In einer besonderen Ausführungsform werden an mechanisch besonders beanspruchten Stellen Hülsen aus Stahl aufgebracht, z. B. auf dem A-seitigen Wellenende.

Um eine höhere Beanspruchung zu ermöglichen, kann die Welle mit Härtungsverfahren, wie z.B. Pressen, Heißpressen, Temperaturschock, behandelt werden.

In einer bestimmten Ausführungsform werden bei beispielsweise Radialfeldmaschinen die Tragkonstruktion, insbesondere Magnettragstrukturen, bei der Wellenherstellung integriert. Neben den Tragstrukturen werden beispielsweise auch Bohrungen, Zapfen oder Endstrukturen zum Wuchten aufgebaut.

In einer weiteren Ausführungsform werden bereits mit Aluminium ummantelte Basaltfasern für die Weiterverarbeitung verwendet.

Ein Vorteil einer Motorwelle aus- oder mit basaltfaserverstärktem Aluminium ist beispielsweise ein mindestens 15% geringerer Energieverbrauch für Material- und Herstellung bei gleicher Steifigkeit im Vergleich zu einer Stahlwelle.

Eine Gewichtsreduktion gegenüber einer Stahlwelle ist ebenso von Vorteil und beträgt ca. 60%.

Ein weiterer Vorteil liegt in einer hohen intrinsischen Schwingungsdämpfung bei gleicher Steifigkeit. Wegen eines a-magnetischen Verhaltens ist eine Weiterleitung störender Magnetfelder geringer, z.B. in die Lagesensorik.

Eine geringe Korrosionsempfindlichkeit, verringerte Kerbwirkung bei Durchmessersprüngen bzw. Wellenabsätzen und eine höhere Festigkeit besonders bei wechselnder Belastung sind weitere Vorteile.

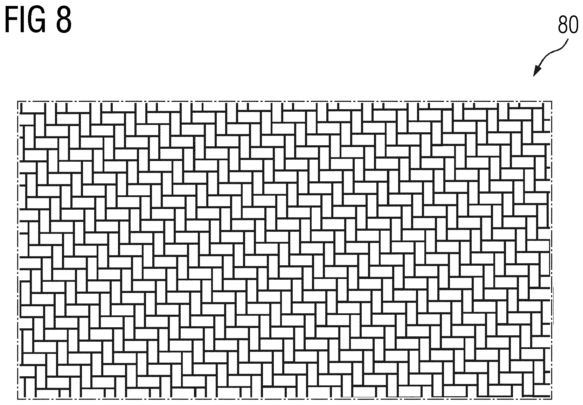

FIG 8 zeigt eine andere mögliche Ausführungsform eines Gewebes 80.

## Patentansprüche

1. Inaktivteil einer dynamoelektrischen Maschine (29), aufweisend Basalt.

2. Inaktivteil nach Anspruch 1, aufweisend wenigstens eine Basaltfaser (100).

3. Inaktivteil nach einem der vorhergehenden Ansprüche, ferner aufweisend Aluminium.

4. Inaktivteil nach einem der vorhergehenden Ansprüche 2 oder 3, wobei die Basaltfaser (100) mit einem Material ummantelt ist, welches Aluminium aufweist, oder wobei die Basaltfaser auf einer Aluminiumfolie angeordnet ist.

5. Inaktivteil nach Anspruch 4, wobei die ummantelte Basaltfaser (100) als Gewebe (60, 70, 80), Filz und/oder Gewirke ausgebildet ist.

6. Inaktivteil nach einem der vorhergehenden Ansprüche, wobei das Inaktivteil eine Welle (21), ein Lagerschild (20, 22) und/oder eine Tragkonstruktion (23) eines Rotors (30) und/ oder Stators (25) ist.

7. Verfahren zur Herstellung eines Inaktivteils nach einem der Ansprüche 1 bis 6, wobei eine Basaltfaser (100) mit einem Aluminium aufweisenden Material ummantelt wird, wobei durch die ummantelte Faser (100) ein Gewebe (60, 70, 80), Filz und/oder Gewirke gebildet wird, wobei das Gewebe (60, 80), der Filz und/oder das Gewirke verdichtet wird.

8. Verfahren nach Anspruch 7, wobei das Gewebe (60, 70, 80), der Filz und/oder das Gewirke in einer das Inaktivteil abbildenden Form verdichtet werden.

9. Verfahren nach einem der Ansprüche 7 oder 8, wobei unter Eintrag von Wärme verdichtet wird.

10. Verfahren nach einem der Ansprüche 7 bis 9, wobei während der Verdichtung durch Strom, Reibung und/oder Mikrowellen erwärmt wird.

11. Verfahren nach einem der Ansprüche 7 bis 10, wobei derart verdichtet und/oder erwärmt wird, dass das das Aluminium aufweisende Material metallstoffschlüssig verbunden wird.

12. Verfahren nach einem der Ansprüche 7 bis 11, wobei das Gewebe, der Filz und/oder das Gewirke rechteckig oder quadratisch ausgebildet ist, wobei das Gewebe (60, 70, 80), der Filz und/oder das Gewirke um eine Wellenseele, beispielsweise in Form eines Stabs, Rohrs und/oder Wickeldorns, gewickelt wird, derart, dass eine Welle gebildet wird.

13. Verfahren nach einem der Ansprüche 7 bis 12, wobei das Gewebe, der Filz und/oder das Gewirke T-förmig ausgebildet ist, wobei das Gewebe (60, 70, 80), der Filz und/oder das Gewirke um eine Wellenseele, beispielsweise in Form eines Stabs, Rohrs und/oder Wickeldorns, gewickelt wird, derart, dass eine Wellen-Tragkonstruktions-Einheit (72) gebildet wird.

14. Verwendung einer Basaltfaser (100), wobei die Basaltfaser (100) mit einem Aluminium aufweisenden Material ummantelt ist, als Bestandteil eines Inaktivteils, insbesondere einer Welle (21), eines Lagerschilds (20, 22) und/oder einer Tragkonstruktion (23) eines Rotors (30) und/oder Stators (25) einer dynamoelektrischen Maschine.

15. Dynamoelektrische Maschine (29), aufweisend ein Inaktivteil nach einem der Ansprüche 1 bis 6.
